# EUROPEAN PATENT SPECIFICATION

(11) **EP 4 053 074 B1**
(45) Date of publication and mention of the grant of the patent: **15.10.2025**
(21) Application number: 20880766.9
(22) Date of filing: 20.10.2020
(51) Int. Cl.: C01B 25/14, H01M 4/62, H01M 10/0562, H01B 1/06, H01B 1/10, C01B 17/22, H01M 4/13, H01M 10/052

(54) **SULFIDE SOLID ELECTROLYTE, AND ELECTRODE MIXTURE, SOLID ELECTROLYTE LAYER, AND SOLID BATTERY USING SAME**
SULFIDFESTELEKTROLYT UND ELEKTRODENMISCHUNG, FESTELEKTROLYTSCHICHT UND FESTKÖRPERBATTERIE DAMIT
ÉLECTROLYTE SOLIDE AU SULFURE, ET MÉLANGE D'ÉLECTRODES, COUCHE D'ÉLECTROLYTE SOLIDE ET BATTERIE SOLIDE L'UTILISANT

(30) Priority: 29.10.2019 JP 2019196777
(43) Date of publication of application: 07.09.2022
(73) Proprietor: Mitsui Mining & Smelting Co., Ltd., Shinagawa-ku Tokyo 141-8584 (JP)
(72) Inventor: HOSHI, Yuji, Ageo-shi, Saitama 362-0021 (JP); MATSUSHIMA, Hideaki, Ageo-shi, Saitama 362-0021 (JP)
(74) Representative: Novagraaf Technologies
(86) International application number: PCT/JP2020/039371
(87) International publication number: WO 2021/085237

(56) References cited:
- EP-A1- 3 171 444
- WO-A1-2019/009228
- WO-A1-2019/078307
- JP-A- 2019 179 731
- ADELI PARVIN ET AL: "Boosting Solid-State Diffusivity and Conductivity in Lithium Superionic Argyrodites by Halide Substitution", vol. 58, no. 26, 24 June 2019 (2019-06-24), pages 8681 - 8686, XP055865320, ISSN: 1433-7851, Retrieved from the Internet <URL:https://onlinelibrary.wiley.com/doi/full-xml/10.1002/anie.201814222> DOI: 10.1002/anie.201814222

## Description

### Technical Field

The present invention relates to a sulfide solid electrolyte, and an electrode material mixture, a solid electrolyte layer and a solid-state battery containing the same.

### Background Art

In recent years, a solid electrolyte has attracted attention since it can replace a liquid electrolyte used in most liquid batteries. A solid-state battery, which contains such a solid electrolyte, is expected to be put to practical use since it is safer than a liquid battery containing a flammable organic solvent and also has a high energy density.

As conventional techniques for solid electrolytes, the technique disclosed in Patent Literature 1 is known, for example. Patent Literature 1 discloses a sulfide-based solid electrolyte wherein the surface of a compound containing lithium, phosphorus, sulfur, and halogen and having an argyrodite-type crystal structure is coated with a compound containing lithium, phosphorus, and sulfur and having a non-argyrodite-type crystal structure. In Patent Literature 1, the surface of the sulfide solid electrolyte is controlled thereby to suppress the generation of hydrogen sulfide from the solid electrolyte and also to ensure the lithium ion conductivity of the solid electrolyte.

### Citation List

### Patent Literature

Patent Literature 1: US 2019/312304A1
Patent Literature 2: JP 2019 179731A

### Summary of Invention

However, the technique disclosed in Patent Literature 1 is primarily intended to solve the problem of the generation of hydrogen sulfide, which is to be suppressed. A further improvement has been required in terms of lithium ion conductivity. Accordingly, it is an object of the present invention to provide a solid electrolyte with a high lithium ion conductivity.

The present invention provides a sulfide solid electrolyte including a compound that has a crystal phase having an argyrodite-type crystal structure and that is represented by LiₐPS_{b}X_{c}, where X is at least one elemental halogen, a represents a number of 3.0 or more and 6.0 or less, b represents a number of 3.5 or more and 4.8 or less, and c represents a number of 0.1 or more and 3.0 or less, wherein the sulfide solid electrolyte has a ratio of A_{Li} / (A_{Li} + A_{P} + A_{S} + A_{X}) to a specific surface area (m²g⁻¹) of 3.40 (%/m²/g) or more, where A_{Li} represents the amount of lithium (atom%) quantitatively determined from a Li 1s peak, A_{P} represents the amount of phosphorus (atom%) quantitatively determined from a P 2p peak, A_{S} represents the amount of sulfur (atom%) quantitatively determined from a S 2p peak, and A_{X} represents the amount of halogen (atom%) quantitatively determined from a halogen peak, the peaks being exhibited in X-ray photoelectron spectroscopy (XPS).

### Description of Embodiments

Hereinafter, the present invention will be described based on a preferred embodiment thereof. A sulfide solid electrolyte according to the present invention (hereinafter also referred to simply as "solid electrolyte") contains a compound that is represented by LiₐPS_{b}X_{c}, where X is at least one elemental halogen, a represents a number of 3.0 or more and 6.0 or less, b represents a number of 3.5 or more and 4.8 or less, and c represents a number of 0.1 or more and 3.0 or less. The compound at room temperature (25°C) is solid and has lithium ion conductivity. Hereinafter, the compound may also be referred to as "compound A" for the sake of convenience.

The compound A in the present invention is a crystalline material that has a crystal phase with an argyrodite-type crystal structure. However, the compound A may also contain a glass component, or in other words, an amorphous component. The expression "the compound A has a crystal phase with an argyrodite-type crystal structure" means that it is sufficient that the compound A has at least a crystal phase with an argyrodite-type crystal structure, and the compound A may have a crystal phase that is different from the crystal phase with an argyrodite-type crystal structure (also referred to as "heterogeneous phase"). Of course, the compound A may not contain the heterogeneous phase. An example of a compound that constitutes the heterogeneous phase is Li₃PS₄.

In the compound A, the proportion of the crystal phase with an argyrodite-type crystal structure relative to all crystal phases constituting the compound A may be, for example, 10 mass% or more, 20 mass% or more, or 50 mass% or more. In particular, the compound A preferably has a crystal phase with an argyrodite-type crystal structure as a primary phase.

As used herein, the term "primary phase" refers to the phase that accounts for the highest proportion relative to the total weight of all crystal phases constituting the solid electrolyte according to the present invention. Accordingly, the content of the compound A is, for example, preferably 60 mass% or more, more preferably 70 mass% or more, 80 mass% or more, and even more preferably 90 mass% or more, based on all crystal phases constituting the solid electrolyte according to the present invention.

On the other hand, the term "heterogeneous phase" refers to a phase that accounts for a proportion lower than the primary phase described above relative to the total weight of all crystal phases constituting the solid electrolyte according to the present invention.

The proportion of the crystal phase can be determined by, for example, calculating the content using X-ray diffractometry.

As used herein, the term "a crystal phase with an argyrodite-type crystal structure" refers to a crystal phase of a family of compounds derived from a mineral represented by the chemical formula: Ag₈GeS₆. In view of improving lithium ion conductivity, the compound having a crystal phase with an argyrodite-type crystal structure particularly preferably has a crystal structure that belongs to the cubic crystal system.

Whether or not the solid electrolyte of the present invention contains a compound having a crystal phase with an argyrodite-type crystal structure can be determined by, for example, XRD analysis. Specifically, in an X-ray diffraction pattern obtained through analysis using an X-ray diffractometer that uses CuKα1 rays, the crystal phase with an argyrodite-type crystal structure has characteristic peaks at 2θ = 15.34° ± 1.00°, 17.74° ± 1.00°, 25.19° ± 1.00°, 29.62° ± 1.00°, 30.97° ± 1.00°, 44.37° ± 1.00°, 47.22° ± 1.00°, and 51.70° ± 1.00°. Furthermore, the crystal phase with an argyrodite-type crystal structure also has characteristic peaks at, for example, 2θ = 54.26° ± 1.00°, 58.35° ± 1.00°, 60.72° ± 1.00°, 61.50° ± 1.00°, 70.46° ± 1.00°, and 72.61° ± 1.00°. The term "peak" used herein means the highest point of a peak. Each of the peaks is preferably present independently without overlapping other peaks.

The crystal phase with an argyrodite-type crystal structure constituting the compound A in the solid electrolyte according to the present invention preferably serves as the primary phase among all crystal phases. The solid electrolyte according to the present invention may consist of the compound A, or may also contain a material of a heterogeneous phase that is different from the crystal phase with an argyrodite-type crystal structure as long as the advantageous effects of the present invention are not impaired. Examples of the material of heterogeneous phase include lithium halide.

As described above, the solid electrolyte according to the present invention contains the compound A. In the solid electrolyte according to the present invention, the surface state of the particles of the solid electrolyte is preferably controlled. Specifically, the particles of the solid electrolyte according to the present invention are preferably controlled such that the abundance ratio of elemental lithium on the surface of the particles is a large value. This improves the lithium ion conductivity of the solid electrolyte according to the present invention. The inventors of the present invention consider the reason for this as follows.

In the solid electrolyte according to the present invention, lithium ions migrate while the particles of the solid electrolyte are in contact with each other. As one of the resistant components when lithium ions migrate, grain boundary resistance, which is a contact resistance between particles, is known. The inventors of the present invention have conducted in-depth studies on a means for reducing the grain boundary resistance, and as a result, it has been found that lithium ions smoothly migrate between particles when a large amount of elemental lithium is present on the surface of the solid electrolyte particles. As a result, the solid electrolyte according to the present invention has decreased grain boundary resistance at contact interfaces between particles, and the lithium ion conductivity is thus improved.

In the solid electrolyte according to the present invention, the amount of elemental lithium on the surface of the solid electrolyte particles is evaluated in terms of the ratio of A_{Li} / (A_{Li} + A_{P} + A_{S} + A_{X}) to the specific surface area A (m²g⁻¹), in view of more significantly exhibiting the advantageous effect described above. A_{Li}, A_{P}, A_{S}, and A_{X} are defined as described below.

A_{Li} is the amount of lithium (atom%) quantitatively determined from the Li (lithium atom) 1s peak exhibited in X-ray photoelectron spectroscopy (hereinafter also referred to as "XPS").

A_{P} is the amount of phosphorus (atom%) quantitatively determined from the P (phosphorus atom) 2p peak exhibited in XPS.

As is the amount of sulfur (atom%) quantitatively determined from the S (sulfur atom) 2p peak exhibited in XPS.

A_{X} is the amount of halogen (atom%) quantitatively determined from the halogen peak. The electron orbit of halogen is selected according to the type of halogen. For example, in the case where halogen is fluorine, the 1s electron orbit is used. In the case where halogen is chlorine, the 2p electron orbit is used. In the case where halogen is bromine, the 3p electron orbit is used. In the case where halogen is iodine, the 3d electron orbit is used.

In the present invention, the ratio of A_{Li} / (A_{Li} + A_{P} + A_{S} + A_{X}) to the specific surface area A (m²g⁻¹), {A_{Li} / (A_{Li} + A_{P} + A_{S} + A_{X})} / A, is preferably 3.40 (%/m²/g) or more, more preferably 3.43 (%/m²/g) or more, and even more preferably 3.45 (%/m²/g) or more. Hereinafter, {A_{Li} / (A_{Li} + A_{P} + A_{S} + A_{X})} / A may also be referred to as "lithium abundance ratio". When the lithium abundance ratio on the surface of the solid electrolyte particles is greater than or equal to the above-described value, the grain boundary resistance at contact interfaces between particles decreases, and the lithium ion conductivity is thus improved. The higher the lithium abundance ratio is, the more preferable it is. The lithium abundance ratio that can be achieved by the state of the art is about 3.63 (%/m²/g). When the lithium abundance ratio is high, the solid electrolyte has sufficiently increased lithium ion conductivity.

As described above, the lithium abundance ratio on the surface of the solid electrolyte according to the present invention can be determined using XPS. A specific method will be described in detail in Examples given later.

The specific surface area A, which is used to calculate the lithium abundance ratio, is preferably 5.0 m²g⁻¹ or more, more preferably 8.0 m²g⁻¹ or more, and even more preferably 10.0 m²g⁻¹ or more. The specific surface area A is preferably 13.1 m²g⁻¹ or less, more preferably 13.0 m²g⁻¹ or less, and even more preferably 12.9 m²g⁻¹ or less. A specific method for determining the specific surface area A will be described in detail in Examples given later.

The solid electrolyte according to the present invention exhibits a lithium ion conductivity at room temperature (25°C) as high as preferably 4.8 mS/cm or more, more preferably 4.9 mS/cm or more, and even more preferably 5.0 mS/cm or more, due to the controlled lithium abundance ratio on the surface of the solid electrolyte. The lithium ion conductivity of the solid electrolyte can be measured using the method described in Examples given later.

As described above, the compound A contained in the solid electrolyte according to the present invention is represented by LiₐPS_{b}X_{c}. As used herein, the expression "the compound A is represented by LiₐPS_{b}X_{c}" encompasses a compound A that is prepared from starting materials so as to satisfy LiₐPS_{b}X_{c}. In the compositional formula, the subscript "a", which represents the molar ratio of elemental lithium (Li), is preferably, for example, a number of 3.0 or more and 6.0 or less, more preferably a number of 3.2 or more and 5.8 or less, and even more preferably a number of 3.4 or more and 5.4 or less. The subscript "a" may be a number less than 5.4.

In the compositional formula, the subscript "b", which represents the molar ratio of elemental sulfur (S), is preferably, for example, a number of 3.5 or more and 4.8 or less, more preferably a number of 3.8 or more and 4.6 or less, and even more preferably a number of 4.0 or more and 4.4 or less. The subscript "b" may be a number less than 4.4.

In the compositional formula, the subscript "c" is preferably, for example, a number of 0.1 or more and 3.0 or less, more preferably a number of 0.2 or more and 2.5 or less, and even more preferably 0.4 or more and 2.0 or less. When a, b, and c are within the above-described respective ranges, the compound A exhibits a sufficiently high lithium ion conductivity. In the compositional formula, X represents at least one elemental halogen. In the case where X is a single kind of element, the compound A may be represented by LiₐPS_{b}F_{c}, LiₐPS_{b}Cl_{c}, LiₐPS_{b}Br_{c}, or LiₐPS_{b}I_{c}, for example. In the case where X is composed of two kinds of element, the compound A is represented by LiₐPS_{b}X¹_{y}X²_{z}, where X¹ and X² represent different elemental halogens, and y and z represent numbers that are greater than 0 and satisfy c = y + z. Examples of the combination of X¹ and X² include a combination of Cl and Br, a combination of Cl and I, and a combination of Br and I. In the case where X is composed of three kinds of element, the compound A is represented by LiₐPS_{b}X¹_{y}X²_{z}X³ᵥ., where X¹, X², and X³ represent different elemental halogens, and y, z, and v represent numbers that are greater than 0 and satisfy c = y + z + v. An example of the combination of X¹, X², and X³ is a combination of Cl, Br, and I. The solid electrolyte according to the present invention may contain a single kind of compound A or two or more kinds of compound A.

In the present invention, the compound A obtained by using starting materials in amounts for satisfying LiₐPS_{b}X_{c} may contain an element other than elemental lithium (Li), elemental phosphorus (P), elemental sulfur (S), or elemental halogen (X). For example, the elemental lithium (Li) may be partially replaced by another elemental alkali metal, the elemental phosphorus (P) may be partially replaced by another elemental pnictogen, or the elemental sulfur (S) may be partially replaced by another elemental chalcogen.

The solid electrolyte according to the present invention may contain, for example, impurities in addition to the compound A. In view of small influence on the performance, the amount of impurities contained in the solid electrolyte may be, for example, less than 5 mol%, preferably less than 3 mol%, and more preferably less than 1 mol%.

The solid electrolyte according to the present invention is in the form of a powder, which is a mass of particles. For example, the particle size of the solid electrolyte according to the present invention is preferably 1.0 µm or less, more preferably 0.95 µm or less, and even more preferably 0.90 µm or less, in terms of the 50th percentile volume-weighted particle size, D₅₀, as determined by laser diffraction scattering particle size distribution analysis. For example, the volume-weighted particle size D₅₀ is preferably 0.40 µm or more, more preferably 0.45 µm or more, and even more preferably 0.50 µm or more. When the volume-weighted particle size D₅₀ of the solid electrolyte according to the present invention falls within the upper limit as described above, the specific surface area of the solid electrolyte increases to thereby increase the amount of elemental lithium present on the particle surface, and as a result, the lithium ion conductivity of the solid electrolyte can be sufficiently increased. In addition, when the solid electrolyte according to the present invention having such a D₅₀ is used in combination with another solid electrolyte, the solid electrolyte according to the present invention can advantageously easily fit into the interstices between particles of the other solid electrolyte. As a result, the number of contact points between solid electrolyte particles and the contact area therebetween increase, and thus the lithium ion conductivity can be effectively improved. On the other hand, when the volume-weighted particle size D₅₀ of the solid electrolyte according to the present invention falls within the lower limit as described above, it is possible to suppress an increase in the overall surface area of the solid electrolyte powder and thus to avoid the problems of an increase in resistance as well as difficulties with mixing with an active material.

The solid electrolyte according to the present invention can be produced preferably using the method described below. A lithium source compound, a phosphorus source compound, a sulfur source compound, and a halogen source compound can be used as starting materials. As the lithium source compound, lithium sulfide (Li₂S) can be used, for example. As the phosphorus source compound, phosphorus pentasulfide (P₂S₅) can be used, for example. When a sulfide is used as the lithium source compound and/or the phosphorus source compound, the sulfide can also serves as the sulfur source compound. As the halogen source compound, lithium halide (LiX) can be used. These starting materials are mixed at a predetermined molar ratio between elemental lithium, elemental phosphorus, elemental sulfur, and elemental halogen. Then, the mixture of the starting materials is calcined under an inert atmosphere or under an atmosphere that contains hydrogen sulfide gas to thereby obtain a compound A represented by LiₐPS_{b}X_{c} and having a crystal phase with an argyrodite-type crystal structure. The atmosphere that contains hydrogen sulfide gas may be 100% hydrogen sulfide gas or a mixed gas of hydrogen sulfide gas and an inert gas such as argon. The calcination temperature is preferably 350°C or more and 550°C or less, for example. The duration of keeping this calcination temperature is preferably 0.5 hours or more and 20 hours or less, for example.

A solid electrolyte containing the compound A is obtained by the method described above. By controlling the particle size of the particles of the solid electrolyte, the lithium abundance ratio on the surface of the particles can be increased. As result of studies by the inventors of the present invention, it has been found that, for controlling the lithium abundance ratio on the surface of the particles of the solid electrolyte, it is advantageous to subject the solid electrolyte to predetermined pulverization processing.

The pulverization can be performed using either a wet method or a dry method. Various types of media mills can be used in the pulverization. Examples of the media mill include a ball mill, a bead mill, a paint shaker, and a homogenizer. As dispersing media that can be used in the medium mill, balls or beads made of ceramic such as alumina or zirconia are used. The diameter of the dispersing media can be, for example, 0.1 mm or more and 50 mm or less.

**In** the case where the pulverization is performed using a wet method, it is preferable to use an organic solvent as a medium for dispersion in view of suppressing the generation of hydrogen sulfide, which is caused by a reaction of the solid electrolyte with water. Examples of the organic solvent include: aromatic organic solvents such as toluene, xylene, benzene, and solvent naphtha; and aliphatic organic solvents such as heptane, decane, normal hexane, cyclohexane, and mineral spirit. These organic solvents may be used singly or in a combination of two or more thereof.

A slurry is prepared by mixing the organic solvent and the solid electrolyte described above, and the slurry is subjected to wet pulverization. For example, the concentration of the solid electrolyte contained in the slurry is preferably 5 mass% or more and 50 mass% or less in view of successfully obtaining a solid electrolyte with a high lithium ion conductivity. **In** the wet pulverization using a media mill, the amount of the dispersing media used is preferably 5 parts by mass or more and 50 parts by mass or less per 100 parts by mass of the slurry in view of easily obtaining a solid electrolyte with a high lithium ion conductivity. **In** general, the duration of dispersing using a media mill is preferably 0.5 hours or more and 60 hours or less in view of easily obtaining a solid electrolyte with a high lithium ion conductivity.

**In** the case where the wet pulverization is performed, the degree of pulverization is preferably controlled such that the solid electrolyte that has undergone the wet pulverization preferably has a volume-weighted particle size D₅₀ of 1.5 µm or less, more preferably 1.0 µm or less, and even more preferably 0.8 µm or less, in view of increasing the ratio of elemental lithium on the surface of the particles of the solid electrolyte and thus increasing the lithium ion conductivity of the solid electrolyte.

The solid electrolyte according to the present invention obtained in the manner described above can be used as, for example, a material for a solid electrolyte layer, or a material to be contained in an electrode material mixture containing an active material. Specifically, the solid electrolyte according to the present invention can be used as a positive electrode material mixture for a positive electrode layer containing a positive electrode active material or a negative electrode material mixture for a negative electrode layer containing a negative electrode active material. Accordingly, the solid electrolyte according to the present invention can be used in a battery that includes a solid electrolyte layer, a so-called solid-state battery. More specifically, the solid electrolyte according to the present invention can be used in a lithium solid-state battery. The lithium solid-state battery may be a primary battery or a secondary battery. However, the solid electrolyte according to the present invention is particularly preferably used in a lithium secondary battery. As used herein, the term "solid-state battery" encompasses a solid-state battery that does not contain any liquid material or any gel material as the electrolyte, and also encompasses a solid-state battery that contains a liquid material or a gel material as the electrolyte in an amount of, for example, 50 mass% or less, 30 mass% or less, or 10 mass% or less.

A solid electrolyte layer in a solid-state battery can be produced using, for example, any of the following methods: a method including dripping onto a substrate a slurry containing the solid electrolyte according to the present invention, a binder, and a solvent, and spreading the slurry using a doctor blade or the like; a method including bringing the slurry into contact with a substrate and then cutting it using an air knife; a method including forming a coating film using a screen printing method or the like, and heat drying the coating film to remove the solvent. Alternatively, the solid electrolyte layer may also be produced by press-forming the powder of the solid electrolyte according to the present invention and then processing the press-formed solid electrolyte as appropriate. The solid electrolyte layer may contain another solid electrolyte in addition to the solid electrolyte according to the present invention. The solid electrolyte layer of the present invention typically has a thickness of preferably 5 µm or more and 300 µm or less, and more preferably 10 µm or more and 100 µm or less.

A solid-state battery includes a positive electrode layer, a negative electrode layer, and a solid electrolyte layer provided between the positive electrode layer and the negative electrode layer, and the solid electrolyte layer preferably contains the solid electrolyte according to the present invention. The shape of the solid-state battery may be, for example, laminate, cylindrical, or rectangular.

**In** the solid-state battery containing the solid electrolyte according to the present invention, the positive electrode material mixture contains a positive electrode active material. As the positive electrode active material, a positive electrode active material used for a lithium secondary battery can be used as appropriate, for example. Examples of the positive electrode active material include a spinel lithium transition metal compound, and a lithium metal oxide with a layered structure. The positive electrode material mixture may contain, in addition to the positive electrode active material, other materials such as a conductive assistant material.

In the solid-state battery containing the solid electrolyte according to the present invention, the negative electrode material mixture contains a negative electrode active material. As the negative electrode active material, a negative electrode active material for a lithium secondary battery can be used as appropriate, for example. Examples of the negative electrode active material include lithium metal, carbon materials such as artificial graphite, natural graphite and non-graphitizable carbon (hard carbon), lithium titanate, titanium niobium composite oxide, silicon, silicon compounds, tin, and tin compounds. The negative electrode material mixture may contain, in addition to the negative electrode active material, other materials such as a conductive assistant material.

### Examples

Hereinafter, the present invention will be described in further by way of examples. However, the scope of the present invention is not limited to the examples given below.

### Example 1

Li₂S powder, P₂S₅ powder, LiCl powder, and LiBr powder were weighed so as to satisfy a composition of Li_{5.4}PS_{4.4}Cl_{0.8}Br_{0.8}. These powders were pulverized and mixed using a ball mill to obtain a powder mixture. The powder mixture was calcined to obtain a lithium ion conductive sulfide as a calcined product. The calcination was performed using a tubular electric furnace. During the calcination, a hydrogen sulfide gas with a purity of 100% was allowed to flow at 1.0 L/min in the electric furnace. The calcination was performed at 450°C for 4 hours. As a result of XRD analysis, it was confirmed that the calcined product had a crystal phase with an argyrodite-type crystal structure and a crystal phase of LiCl_{0.5}Br_{0.5}.

The calcined product was roughly crushed using a mortar and a pestle, and thereafter crushed using a hammer crusher to obtain a crushed product. The crushed product was mixed with a solvent to obtain a slurry with a concentration of 12 mass%. The slurry was placed in a bead mill (with zirconia beads having a diameter of 0.3 mm) and subjected to wet pulverization. The solvent used in the slurry was toluene. 15 parts by mass of beads were used relative to 100 parts by mass of the slurry, and the wet pulverization was performed for 3 hours. After the wet pulverization, the slurry was subjected to solid-liquid separation, and the solid was dried. The calcined product after drying was sieved using a sieve with a mesh size of 53 µm, to thereby obtain the intended solid electrolyte.

### Examples 2 and 3, and Comparative Example 1

A solid electrolyte was obtained in the same manner as in Example 1, except that the calcination temperature and the slurry concentration were changed to the values shown in Table 1 given below.

### Comparative Example 2

A solid electrolyte was obtained in the same manner as in Example 1, except that a calcined product was produced so as to satisfy a composition of Li_{5.4}PS_{4.4}Cl_{1.6}Br_{0.0}, and that the calcination temperature and the slurry concentration were changed to the values shown in Table 1 given below.

### Comparative Example 3

A solid electrolyte was obtained in the same manner as in Example 1, except that a calcined product was produced so as to satisfy a composition of Li_{5.8}PS_{4.8}Cl_{1.2}Br_{0.0}, and that the calcination temperature and the slurry concentration were changed to the values shown in Table 1 given below.

### Evaluation 1

For each of the solid electrolytes obtained in Examples and Comparative Examples, the volume-weighted particle size D₅₀ was determined using the method described below. The results are shown in Table 1 given below.

### Determination of D₅₀

By using a sample delivery controller for laser diffraction particle size distribution analyzer ("Microtrac SDC" available from Microtrac BEL Corporation), a sample (powder) was introduced into an organic solvent, and the resulting mixture at a flow rate of 50% was irradiated with ultrasonic wave of 30 W for 60 seconds a plurality of times. Thereafter, the particle size distribution was determined using a laser diffraction particle size distribution analyzer "MT 3000 II" available from Microtrac BEL Corporation, and D₅₀ was determined from the obtained volume-weighed particle distribution chart. As the water-soluble organic solvent, toluene was used.

### Evaluation 2

For each of the solid electrolytes obtained in Examples and Comparative Examples, the lithium abundance ratio on the surface of the solid electrolyte was determined using the method described below. The results are shown in Table 1 given below.

The surface of the solid electrolyte particles was analyzed using Versa Probe III available from ULVAC-PHI, Inc. The conditions for the analysis were as follows.
Excitation X-ray: monochromatic Al ray (1486.7 eV)
Output: 50 W
Acceleration voltage: 15 kV
X-ray irradiation diameter: 200 µmφ
Measurement area: 1000 µm × 1000 µm
Take of angle: 45°
Pass energy: 26.0 eV
Energy step: 0.1 eV

XPS data was analyzed using data analysis software ("MultiPak Ver. 9.0" available from ULVAC-PHI, Inc.). For the background mode, Iterated Shirley was used. The orbit used for calculation was selected for each element as follows.
Li: 1s
P: 2s
S: 2s
Cl: 2p
Br: 3p

More specifically, the surface of each solid electrolyte was analyzed using XPS under the above-described conditions, the peak area was determined from the spectrum obtained by X-ray photoelectron spectroscopy, and the atomic composition in percent was calculated for the above-listed elements.

### Evaluation 3

For each of the solid electrolytes obtained in Examples and Comparative Examples, specific surface area A was measured. Specifically, a sample (powder) was heated in vacuo at 120°C for 1 hour using a pretreatment instrument "BELPREP VAC II" available from Microtrac BEL Corporation. After that, using a specific surface area analyzer "BELSORP MINI II" available from Microtrac BEL Corporation, specific surface area A was obtained by calculating from the amount of nitrogen gas adsorbed at liquid nitrogen temperature (77 K) using a BET (Brunauer Emmett Teller) method. The results are shown in Table 1 given below.

### Evaluation 4

For each of the solid electrolytes obtained in Examples and Comparative Examples, lithium ion conductivity was measured using the method described below. The results are shown in Table 1 given below.

The solid electrolyte was subjected to uniaxial press-molding in a glove box purged with a sufficiently dried Ar gas (dew point: -60°C or less). Furthermore, the resultant was molded at 200 MPa using a cold isostatic pressing apparatus to obtain a pellet with a diameter of 10 mm and a thickness of about 4 mm to 5 mm. A carbon paste for electrodes was applied to the upper and lower sides of the pellet, and then the resultant was heated at 180°C for 30 minutes to obtain a sample for ion conductivity measurement. The lithium ion conductivity of the sample was measured using "Solartron 1255B" available from Toyo Corporation. The measurement was performed at a temperature of 25°C and a frequency of 0.1 Hz to 1 MHz using an alternate-current impedance method.

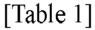

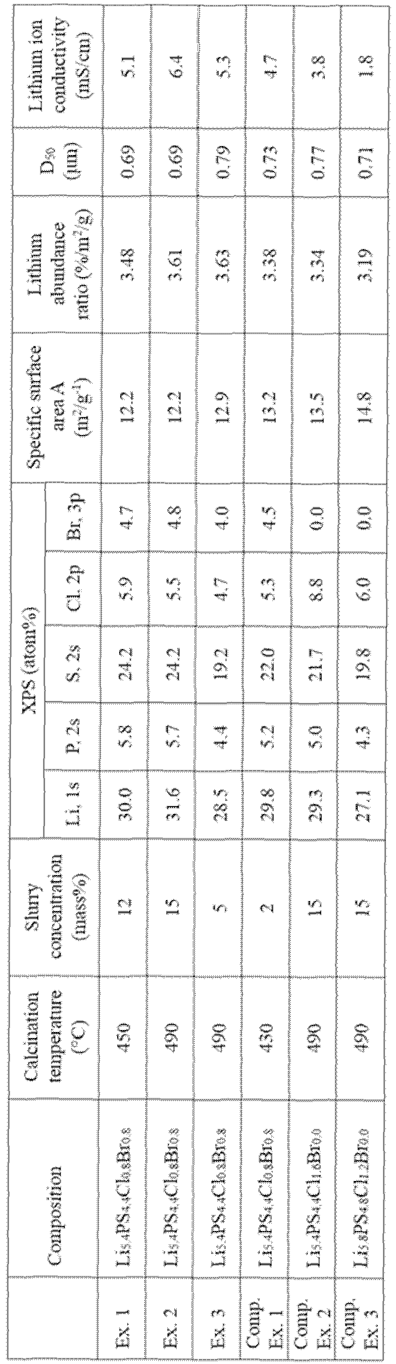

As can be clearly seen from the results shown in Table 1, the solid electrolytes obtained in Examples exhibited a higher lithium ion conductivity than the solid electrolytes obtained in Comparative Examples.

### Industrial Applicability

According to the present invention, a sulfide solid electrolyte with a high lithium ion conductivity is provided.

## Claims

1. A sulfide solid electrolyte comprising:
a compound that comprises a crystal phase having an argyrodite-type crystal structure and that is represented by LiₐPS_{b}X_{c}, where X is at least one elemental halogen, a represents a number of 3.0 or more and 6.0 or less, b represents a number of 3.5 or more and 4.8 or less, and c represents a number of 0.1 or more and 3.0 or less,
wherein the sulfide solid electrolyte has a ratio of A_{Li} / (A_{Li} + A_{P} + A_{S} + A_{X}) to a specific surface area (m²g⁻¹) of 3.40 (%/m²/g) or more, where A_{Li} represents the amount of lithium (atom%) quantitatively determined from a Li 1s peak, A_{P} represents the amount of phosphorus (atom%) quantitatively determined from a P 2p peak, A_{S} represents the amount of sulfur (atom%) quantitatively determined from a S 2p peak, and A_{X} represents the amount of halogen (atom%) quantitatively determined from a halogen peak, the peaks being exhibited in X-ray photoelectron spectroscopy (XPS).

2. The sulfide solid electrolyte according to claim 1,
wherein the sulfide solid electrolyte has a specific surface area of 13.1 m²g⁻¹ or less.

3. An electrode material mixture comprising:
the sulfide solid electrolyte according to claim 1 or 2; and
an active material.

4. A solid electrolyte layer comprising the sulfide solid electrolyte according to claim 1 or 2.

5. A solid-state battery comprising the sulfide solid electrolyte according to claim 1 or 2.

## Patentansprüche

1. Festkörperelektrolyt auf Sulfidbasis, umfassend:
eine Verbindung, die eine Kristallphase mit einer Argyrodit-Kristallstruktur aufweist und durch die Formel LiaPSbXc dargestellt ist, wobei X mindestens ein Halogenelement ist, a eine Zahl von 3,0 oder mehr und 6,0 oder weniger, b eine Zahl von 3,5 oder mehr und 4,8 oder weniger und c eine Zahl von 0,1 oder mehr und 3,0 oder weniger darstellt,
wobei der Festkörperelektrolyt auf Sulfidbasis ein Verhältnis von ALi / (ALi + AP + AS + AX) zu einer spezifischen Oberfläche (m²/g) von 3,40 (%/m²/g) oder mehr aufweist, wobei:
• ALi die Menge an Lithium (Atom-%) darstellt, die quantitativ aus einem Li 1s-Peak bestimmt wird,
• AP die Menge an Phosphor (Atom-%) darstellt, die quantitativ aus einem P 2p-Peak bestimmt wird,
• AS die Menge an Schwefel (Atom-%) darstellt, die quantitativ aus einem S 2p-Peak bestimmt wird, und
• AX die Menge an Halogen (Atom-%) darstellt, die quantitativ aus einem Halogen-Peak bestimmt wird,
wobei die Peaks mittels Röntgenphotoelektronenspektroskopie (XPS) gemessen werden.

2. Festkörperelektrolyt auf Sulfidbasis nach Anspruch 1, wobei der Festkörperelektrolyt auf Sulfidbasis eine spezifische Oberfläche von 13,1 m²/g oder weniger aufweist.

3. Elektrodenmaterialmischung, umfassend:
• den Festkörperelektrolyt auf Sulfidbasis nach Anspruch 1 oder 2; und
• ein Aktivmaterial.

4. Festkörperelektrolytschicht, umfassend den Festkörperelektrolyt auf Sulfidbasis nach Anspruch 1 oder 2.

5. Festkörperbatterie, umfassend den Festkörperelektrolyt auf Sulfidbasis nach Anspruch 1 oder 2.

## Revendications

1. Électrolyte solide à base de sulfure comprenant :
un composé qui comprend une phase cristalline ayant une structure cristalline de type argyrodite et qui est représenté par Liₐ PS_{b} X_{c} , où X est au moins un halogène élémentaire, a représente un nombre compris entre 3,0 et 6,0, b représente un nombre compris entre 3,5 et 4,8, et c représente un nombre compris entre 0,1 et 3,0,
dans lequel l'électrolyte solide à base de sulfure a un rapport A_{Li} / (A_{Li} + A_{P} + A_{S} + A_{X} ) sur une surface spécifique (m²g⁻¹) de 3,40 (%/m²/g) ou plus, où A_{Li} représente la quantité de lithium (en % atomique) déterminée quantitativement à partir d'un pic Li 1s, A_{P} représente la quantité de phosphore (en % atomique) déterminée quantitativement à partir d'un pic P 2p, A_{S} représente la quantité de soufre (en % atomique) déterminée quantitativement à partir d'un pic S 2p, et A_{X} représente la quantité d'halogène (en % atomique) déterminée quantitativement à partir d'un pic d'halogène, les pics étant observés dans la spectroscopie photoélectronique à rayons X (XPS) .

2. Électrolyte solide à base de sulfure selon la revendication 1,
dans lequel l'électrolyte solide à base de sulfure a une surface spécifique de 13,1 m² g⁻¹ ou moins.

3. Mélange de matériaux d'électrode comprenant :
l'électrolyte solide à base de sulfure selon la revendication 1 ou 2 ; et
un matériau actif.

4. Couche d'électrolyte solide comprenant l'électrolyte solide à base de sulfure selon la revendication 1 ou 2.

5. Batterie à l'état solide comprenant l'électrolyte solide à base de sulfure selon la revendication 1 ou 2.
